# EUROPÄISCHE PATENTSCHRIFT

(11) **EP 1 132 195 B1**
(45) Veröffentlichungstag und Bekanntmachung des Hinweises auf die Patenterteilung: **09.01.2008**
(21) Anmeldenummer: 01103656.3
(22) Anmeldetag: 23.02.2001
(51) Int. Cl.: B29C 71/04, C23C 16/513, C23C 8/36, H05H 1/34

(54) **Oberflächenbehandlung oder Beschichtung bahnförmiger Werkstoffe mittels eines indirekten atmosphärischen Plasmatrons**
Surface treatment or coating of strips using an atmospheric, non-transferred arc plasmatron
Traitement de surface ou revêtement de bandes utilisant un plasmatron atmosphérique à arc non transféré

(30) Priorität: 08.03.2000 DE 10011276
(43) Veröffentlichungstag der Anmeldung: 12.09.2001
(73) Patentinhaber: Wipak Walsrode GmbH & Co. KG, 29656 Walsrode (DE)
(72) Erfinder: Kuckertz, Christian, Dr., 29683 Fallingbostel (DE); Jacobsen, Sven, Dr., 29683 Fallingbostel (DE); Brandt, Rainer, Dr., 29664 Walsrode (DE); Landes, Klaus, Prof. Dr., 81479 München (DE); Hartmann, Ralf, 81737 München (DE)
(74) Vertreter: Kutzenberger, Helga

(56) Entgegenhaltungen:
- EP-A- 0 851 720
- DE-A- 19 807 086
- US-A- 5 759 329

## Beschreibung

Die vorliegende Erfindung betrifft die Verwendung eines atmosphärischen Plasmas zur Veredlung von Kunststoff- und Metallfolien.

Viele Veredlungsschritte, wie beispielsweise Bedrucken, Beschichten, Lackieren, Verkleben, etc., sind bei Kunststoff- und Metallfolien nur möglich, wenn eine ausreichende Benetzbarkeit mit lösungsmittel- oder wasserbasierten Druckfarben, Lacken, Primern, Klebstoffen, etc. gegeben ist. Im allgemeinen wird deshalb in- oder offline mit der Folienverarbeitung eine Corona-Behandlung vorgenommen.

Wie z.B. in den Druckschriften DE-A-42 12 549, DE-A-36 31 584, DE-A-44 38 533, EP-A-497 996 und DE-A-32 19 538 beschrieben, werden dabei die bahnförmigen Materialien einer gleichmäßig verteilten elektrischen Entladung ausgesetzt. Vorraussetzung sind zwei Arbeitselektroden, von der eine mit einem dielektrischen Material (Silikon, Keramik) ummantelt ist. Zwischen beiden Elektroden wird eine hohe Wechselspannung mit einer Frequenz typischerweise zwischen 10 und 100 kHz gelegt, so dass eine gleichmäßige Funkenentladung stattfindet. Das zu behandelnde Material wird zwischen den Elektoden durchgeführt und der Entladung ausgesetzt. Dabei kommt es zu einer "Bombardierung" der Polymeroberfläche mit Elektronen, wobei deren Energie ausreicht, um Bindungen zwischen Kohlenstoff-Wasserstoff und Kohlenstoff-Kohlenstoff aufzubrechen. Die gebildeten Radikale reagieren mit dem Coronagas und bilden dabei neue fünktionelle Gruppen aus. Des weiteren findet eine Reinigung der Polymer- bzw. Metalloberfläche statt, da Folienadditive und Walzöle aufoxidiert und abdestilliert werden.

Trotz des breiten Anwendungsspektrums und der ständigen Weiterentwicklung hat die Corona-Behandlung deutliche Nachteile. So kommt es insbesondere bei höheren Bahngeschwindigkeiten zu einer parasitären Rückseitencoronaentladung, wenn die bahnförmigen Materialien nicht auf der walzenförmigen Elektrode aufliegen. Weiterhin kommt es durch die Corona-Behandlung zu einer deutlichen elektrostatischen Aufladung der bahnförmigen Materialien, die das Aufwickeln der Materialien erschwert, die nachfolgende Bearbeitungsschritte, wie Lackieren, Bedrucken oder Verkleben behindert und insbesondere bei der Herstellung von Verpackungsfolien dafür verantwortlich ist, dass pulverförmige Materialien wie Kaffee oder Gewürze an der Folie anhaften und im schlimmsten Fall zu undichten Siegelnähten beitragen. Schließlich ist die Corona-Behandlung immer eine Filamententladung, die keinen homogen geschlossenen Oberflächeneffekt erzeugt. Außerdem stellt man mit der Zeit fest, dass ein Verlust der Oberflächeneigenschaften aufgrund der Migration von Folienadditiven auftritt und dass eine molekularen Neuanordnung, die auf einer Minimierung der Oberflächenenergie beruht, stattfindet.

Die Corona Behandlung beschränkt sich dabei auf dünne Substrate, wie Kunstofffolien und Papiere. Bei dickeren Materialien ist der Gesamtwiderstand zwischen den Elektroden zu groß, um die Entladung zu Zünden. Es kann dann aber auch zu einzelnen Durchschlägen kommen. Nicht anzuwenden ist die Corona-Entladung bei elektrisch leitfähigen Kunststoffen. Außerdem zeigen dielektrische Elektroden bei metallischen oder metallhaltigen Bahnen oft nur eine begrenzte Wirkung. Die Dielektrika können aufgrund der dauerhaften Beanspruchung leicht durchbrennen. Dies trifft insbesondere bei silikonbeschichteten Elektroden auf. Keramische Elektroden sind gegenüber mechanischen Beanspruchungen sehr empfindlich.

Neben der Corona-Entladung können Oberflächenbehandlungen auch durch Flammen oder Licht durchgeführt werden. Die Flammbehandlung wird üblicherweise bei Temperaturen um 1700°C und Abständen zwischen 5 und 150 mm durchgeführt. Da sich die Folien dabei kurzfristig auf hohe Temperaturen von etwa 140°C aufheizen, muss eine effektive Kühlung vorgenommen werden. Zur weiteren Verbesserung der ohnehin guten Behandlungsergebnisse kann der Brenner gegenüber der Kühlwalze auf ein elektrisches Potential gebracht werden, dass die Ionen der Flamme auf die zu behandelnde Bahn beschleunigt (polarisierte Flamme). Als nachteilig für die Oberflächenbehandlung von Folien sind insbesondere die genau einzuhaltenden Verfahrensparameter anzusehen. Eine zu geringe Behandlungsintensität führt zu geringfügigen, nicht ausreichenden, Effekten. Zu starke Intensitäten führen zu einem Aufschmelzen der Oberflächen, die funktionellen Gruppen tauchen nach innen ab und sind somit unzugänglich. Ebenfalls als nachteilig sind die hohen Temperaturen und die notwendigen Sicherheitsvorkehrungen zu bewerten. Die geltenden Sicherheitsvorschriften lassen beispielsweise keinen gepulsten Betrieb einer Flammvorbehandlungsanlage zu. Es ist bekannt, dass die Auswahl des Brennergases nur bestimmte reaktive Spezies (Ionen und Radikale) zulässt und dass die Kosten der Flammbehandlung deutlich höher sind als bei der Corona-Behandlung.

Der Hauptnachteil der Corona-Behandlung, die lokalisierten Mikroentladungen (Filamente), kann durch die Anwendung eines Niederdruckplasmas umgangen werden. Diese meist "kalten" Plasmen werden mittels Gleich-, Wechsel- oder Hochfrequenzstrom bzw. durch Mikrowellen erzeugt. Bei nur geringer thermischer Belastung des zu behandelnden - meist empfindlichen Materials - werden energiereiche und chemisch aktive Teilchen bereitgestellt. Diese bewirken eine gezielte chemische Reaktion mit der Materialoberfläche, da die Prozesse in der Gasphase bei niedrigem Druck in besonders effektiver Weise verlaufen und sich die Entladung als eine homogene Raumentladungswolke darstellt. Mit Mikrowellenanregungen im Giga-Hz-Bereich lassen sich ganze Reaktorgefäße mit Plasmaentladung ausfüllen. Im Vergleich zu nasschemischen Prozessen sind extrem geringe Mengen an Prozessmitteln notwendig.

Neben der gezielten Aktivierung (Modifikation) von Oberflächen können in derartigen Prozessen auch Polymerisationen (Beschichten) und Pfropfungen vorgenommen werden. Als Folge der Plasmaeinwirkung können klassische Polymerisationsmonomere, wie Ethylen, Acetylen, Styrole, Acrylate oder Vinylverbindungen als auch solche Ausgangsstoffe zur Vernetzung und damit zur Polymer- bzw. Schichtbildung angeregt werden, die in klassischen chemischen Reaktionen nicht polymerisieren können. Dies sind beispielsweise gesättigte Kohlenwasserstoffe wie Methan, Siliciumverbindungen wie Tetramethylsilan oder Amine. Es entstehen dabei angeregte Moleküle, Radikale und Molekülbruchstücke, die aus der Gasphase auf den zu beschichtenden Materialien aufpolymerisieren. Die Reaktion findet normalerweise in einem inerten Trägergas wie Argon statt. Vorteilhaft können für verschiedene Zwecke gezielt Reaktivgase, wie Wasserstoff, Stickstoff, Sauerstoff, etc. zugesetzt werden.

Etablierte physikalische und chemische Plasmabeschichtungsverfahren wie das Kathodenzerstäuben (Sputtern) oder die plasma-aktivierte chemische Abscheidung aus der Gasphase (PACVD) finden in der Regel im Vakuum bei Drucken zwischen 1 und 10⁻⁵ mbar statt. Deshalb sind die Beschichtungsprozesse mit hohen Investitionskosten für die erforderliche Vakuumkammer und das zugehörige Pumpsystem verbunden. Zudem werden die Prozesse aufgrund der geometrischen Begrenzungen durch die Vakuumkammer und die notwendigen, zum Teil sehr langen Pumpzeiten in der Regel als Batch-Prozesse ausgeführt, so dass lange Prozesszeiten und damit verbunden hohe Stückkosten entstehen.

Beschichtungsprozesse mittels Corona-Entladung benötigen vorteilhafterweise überhaupt kein Vakuum, sie laufen bei Atmosphärendruck ab. Ein derartiges Verfahren (ALDYNE^{™}) wird in DE 694 07 335 T2 beschrieben. Im Unterschied zur konventionellen Corona, die mit der Umgebungsluft als Prozessgas arbeitet, liegt bei der Corona-Beschichtung eine definierte Prozessgasatmosphäre im Entladungsbereich vor. Durch ausgesuchte Precusoren können Schichtsysteme folgenden Aufbaus erhalten werden: z.B. Schichten auf SiOx-Basis aus siliciumorganischen Verbindungen wie Tetramethylsilan (TMS), Tetarethoxysilan (TEOS) oder Hexamethyldisiloxan (HMDSO), polymerähnliche Kohlenwasserstoffschichten aus Kohlenwasserstoffen wie Methan, Acetylen oder Propargylalkohol sowie fluorierte Kohlenstoffschichten aus fluorierten Kohlenwasserstoffen wie beispielsweise Tetrafluorethen.

Ein gravierender Nachteil der bestehenden Verfahren ist jedoch die nicht geschlossene Oberflächenabscheidung, verursacht durch die filamentförmige Entladungscharakteristik der Corona. Dementsprechend ist das Verfahren zur Aufbringung von Barrierebeschichtungen ungeeignet. Für die Oberflächenpolarisierung durch Einführung funktioneller Gruppen im Vergleich zur einfachen Corona-Entladung ist das Verfahren zu teuer.

Um punktförmige, teilflächige Beschichtungen, wie sie bei der Corona-Beschichtung, auftreten zu vermeiden, können atmosphärische Plasmen auch durch Lichtbogenentladungen in einem Plasmabrenner erzeugt werden. Bei herkömmlichen Brennertypen sind aufgrund der Elektrodengeometrie mit stiftförmiger Kathode und konzentrischer Hohlanode nur nahezu kreisförmige Ansatzflächen des austretenden Plasmastrahls auf der zu bearbeitenden Oberfläche erreichbar. Bei großflächigen Anwendungen benötigt das Verfahren einen enormen Zeitbedarf und liefert wegen des relativ kleinen Ansatzpunktes sehr inhomogene Oberflächenstrukturen.

In DE-A-195 32 412 wird eine Vorrichtung zum Vorbehandeln von Oberflächen mit Hilfe eines Plasmastrahls beschrieben. Durch eine besondere Gestaltung der Plasmadüse wird ein hochreaktiver Plasmastrahl erreicht, der etwa die Gestalt und die Abmessungen einer Kerzenflamme hat und somit auch die Behandlung von Profilteilen mit verhältnismäßig tiefem Relief gestattet. Aufgrund der hohen Reaktivität des Plasmastrahls genügt eine sehr kurzzeitige Vorbehandlung, so dass das Werkstück mit entsprechend hoher Geschwindigkeit an dem Plasmastrahl vorbeigeführt werden kann. Für eine Behandlung größerer Oberflächen ist in der genannten Veröffentlichung eine Batterie aus mehreren versetzt angeordneten Plasmadüsen vorgeschlagen worden. In diesem Fall ist jedoch ein sehr hoher apparativer Aufwand erforderlich. Da sich die Düsen zum Teil überschneiden, kann es bei der Behandlung bahnförmiger Materialien außerdem zu streifenförmigen Behandlungsmustern kommen.

In DE-A-298 05 999 wird eine Vorrichtung zur Plasmabehandlung von Oberflächen beschrieben, die durch einen Rotationskopf gekennzeichnet ist, der mindestens eine exzentrisch angeordnete Plasmadüse zur Erzeugung eines parallel zur Rotationsachse gerichteten Plasmastrahls trägt. Wenn das Werkstück relativ zu dem mit hoher Drehzahl rotierenden Rotationskopfes bewegt wird, überstreicht der Plasmastrahl eine streifenförmige Oberflächenzone des Werkstücks, deren Breite dem Durchmesser des bei der Rotation von der Plasmadüse beschriebenen Kreises entspricht. Auf diese Weise kann zwar mit einem vergleichsweise geringem apparativem Aufwand eine relativ große Oberfläche rationell vorbehandelt werden. Dennoch entsprechen die Oberflächenabmessungen nicht denen, wie sie üblicherweise bei der Verarbeitung von Folienmaterialien im industriellen Maßstab vorliegen.

In DE-A-195 46 930 und DE-A-43 25 939 sind sogenannte Coronadüsen für die indirekte Behandlung von Werkstückoberflächen beschrieben. In derartigen Coronadüsen tritt zwischen den Elektroden ein oszillierend oder umlaufend geführter Luftstrom aus, so dass man eine flächige Entladungszone erhält, in der die zu behandelnde Oberfläche des Werkstücks mit den Coronaentladungsbüscheln überstrichen werden kann. Als nachteilig stellte sich bei diesem Verfahren heraus, dass zur Vergleichmäßigung der elektrischen Entladung ein mechanisch bewegtes Bauteil vorgesehen werden muss, welches einen hohen konstruktiven Aufwand erfordert. In den genannten Schriften wird zudem nicht beschrieben in welchen maximalen Breiten derartige Coronadüsen hergestellt und angewendet werden können.

Für die vorliegende Erfindung bestand die Aufgabe Oberflächen von Kunststoff- und Metallfolien homogen zu behandeln bzw. zu beschichten, so dass sich anschließende Veredlungsschritte, wie beispielsweise Bedrucken, Beschichten, Lackieren, Verkleben, etc. ohne Benetzungsprobleme und mit guten Hafteigenschaften durchführen lassen.

Dabei wurde das Ziel verfolgt ein Verfahren anzubieten, welches die durch Niederdruckplasmen (Batchbetrieb, Kosten), Corona (filamentförmige Entladung, Rückseitenbehandlung, elektrostatische Aufladung, etc.) und Plasmadüsen (streifenförmige Oberflächenbehandlung) gegebenen Nachteile umgeht.

Erfindungsgemäß gelang dies durch die Verwendung gemäß dem Anspruch 1 eines atmosphärischen indirekten Plasmatrons mit dem eine homogene voll- oder teilflächige Oberflächenbehandlung von polymeren oder metallischen bahnförmigen Werkstoffen ermöglicht wird. Die erfindungsgemäß verwendeten metallischen Werkstoffe haben dabei eine Dicke kleiner 100µm.

Ein erfindungsgemäß verwendbares atmosphärisches indirektes Plasmatron wird z.B. in der EP-A-851 720 beschrieben (incorporated by reference).

Der Brenner zeichnet sich durch zwei koaxial in größerem Abstand angeordnete Elektroden aus. Zwischen diesen brennt ein Gleichstrombogen, der durch eine kaskadierte Anordnung frei einstellbarer Länge wandstabilisiert wird. Durch ein Anblasen transversal zur Bogenachse, kann ein seitlich abströmender, bandförmiger Plasmastrahl austreten. Dieser Brenner, auch Plasmabreitstrahlbrenner genannt, ist auch dadurch gekennzeichnet, dass ein Magnetfeld auf den Lichtbogen eine Kraft ausübt, die der durch die Strömung des Plasmagases auf den Lichtbogen ausgeübten Kraft entgegenwirkt. Dem Brenner können zudem verschiedene Arten an Plasmagasen zugeführt werden.

Insbesondere wird dabei ein indirektes Plasmatron mit einer länglichen Plasmakammer verwendet, die in kaskadiertem Aufbau eine Mehrzahl von elektrisch gegeneinander isolierten Neutroden umfasst, wobei die zur Erzeugung des Plasma-Lichtgas erforderlichen Elektroden koaxial zur Längsachse der Plasmakammer angeordnet sind und die Plasmastrahl-Austrittsöffnung parallel zur Längsachse der Plasmakammer verläuft, verwendet wird.

Dabei wird insbesondere zumindest eine Neutrode mit einem Permanentmagneten-Paar zur Beeinflussung der Form und der Position des Plasma-Lichtbogens versehen. Durch die Anzahl, Plazierung und Feldstärke der eingesetzten Magnete kann auf Betriebsparameter wie beispielsweise Gasmenge und Gasgeschwindigkeit Rücksicht genommen werden.

Weiterhin kann die Möglichkeit zur Zuführung eines Gases und/oder Aerosols in die Plasmakammer vorgesehen werden. Dadurch kann dieses Plasmagas dem Lichtbogen besonders gezielt und homogen zugeführt werden. Durch ein Anblasen transversal zur Bogenachse kann ein seitlich abströmender, bandförmiger Plasmafreistrahl austreten.

Durch die Anwendung eines Magnetfeldes wird eine Auslenkung und der daraus resultierende Abriss des Lichtbogens verhindert

Ein weiterer Gegenstand der Erfindung ist ein Verfahren gemäß dem Anspruch 4 zur homogenen voll- oder teilflächigen Oberflächenbehandlung eines über Walzenpaare bewegten bahnförmigen polymeren oder metallischen Werkstoffes, das dadurch gekennzeichnet ist, dass man ein indirektes Plasmatron, welches eine längliche Plasmakammer aufweist, die in kaskadiertem Aufbau eine Mehrzahl von elektrisch isolierten Neutroden umfasst erfindungsgemäß verwendet. Dabei sind die zur Erzeugung des Plasma Lichtbogens erforderlichen Elektroden koaxial zur Längsachse der Plasmakammer angeordnet und die Plasmaaustrittsöffnung verläuft parallel zur Längsachse der Plasmakammer. Das atmosphärische Plasma wirkt dabei gegebenenfalls unter Zuführung eines Gases oder Gasgemisches, und/oder eines Aerosols oder Aerosolgemisches oder einer Kombination von Gasen und Aerosolen auf die Oberfläche der polymeren oder metallischen Werkstoffe ein. Der erfindungsgemäß verwendete metallische Werkstoff hat dabei eine Dicke kleiner als 100µm.

Das erfindungsgemäß beschriebene Verfahren zur Oberflächenbehandlung lässt sich sowohl im Anschluss an eine Folienfertigung als auch vor der Weiterverarbeitung, d.h. vor dem Bedrucken, Laminieren, Beschichten, etc. von Folien durchführen. Die Dicke der polymeren Folienmaterialien ist im wesentlichen nicht maßgeblich und bewegt sich im Dickenbereich von 0,5 µm und 2 cm, vorzugsweise im Bereich zwischen 10 und 200 µm.

Das erfindungsgemäß beschriebene Verfahren zur Oberflächenbehandlung kann auf polymeren Werkstoffen, jedoch auch zur Behandlung von metallischen Substraten, insbesondere aber auf Kunststoff- und Metallfolien angewendet werden. Insbesondere kann das erfindungsgemäße Verfahren auch auf polymere bahnförmige Werkstoffe angewandt werden, die gegebenenfalls mit Metall, Metalloxiden oder SiOₓ bedampft sind.

Im Rahmen der vorliegenden Erfindung werden unter Kunststofffolien insbesondere diejenigen verstanden, die aus einem thermoplastischen Material, insbesondere aus Polyolefinen wie Polyethylen (PE) oder Polypropylen (PP), aus Polyester wie Polyethylentherephthalat (PET), Polybutylenterephthalat (PBT) oder flüssigkristallinen Polyestern (LCP), aus Polyamiden wie Nylon 6,6; 4,6; 6; 6,10; 11; 12; aus Polyvinylchlorid (PVC), aus Polyvinyldichlorid (PVDC), aus Polycarbonat (PC), aus Polyvinylalkohol (PVOH), aus Polyethylvinylalkohol (EVOH), aus Polyacrylnitril (PAN), aus Polyacryl-Butadien-Styrol (ABS), aus Polystyrol-Acrylnitril (SAN), aus Polyacrylester-Styrol-Acrylnitril (ASA), aus Polystyrol (PS), aus Polyacrylaten, wie Poylmethylmetacrylat (PMMA), aus Zellglas, oder aus Hochleistungsthermoplasten wie Fluorpolymeren, wie Polytetrafluorethylen (PTFE) und Polyvinyldifluorid (PVDF), aus Polysulfonen (PSU), aus Polyethersulfonen (PES), aus Polyphenylsulfiden (PPS), aus Polyimiden (PAI, PEI), aus Polyaryletherketonen (PAE) bestehen, insbesondere aber auch diejenigen die aus Mischungen oder aus Co- oder Terpolymeren Materialien und diejenigen die durch Coextrusion von Homo-, Co- oder Terpolymeren hergestellt werden.

Unter Kunststofffolien werden auch diejenigen verstanden, die aus einem thermoplastischen Material bestehen und mit einem Metall der 3. Hauptgruppe bzw. der 1. oder 2. Nebengruppe oder mit SiOₓ oder einem Metalloxid der 2. oder 3.
Hauptgruppe bzw. der 1. oder 2. Nebengruppe bedampft sind.

Unter Metallfolien werden Folien verstanden, die aus Aluminium, Kupfer, Gold, Silber, Eisen (Stahl) oder aus Legierungen der genannten Metalle bestehen.

Unter der Oberflächenbehandlung durch ein atmosphärisches Plasma wird im Rahmen der vorliegenden Erfindung verstanden, dass durch die Wechselwirkung mit dem Plasmagas eine Erhöhung der Oberflächenspannung der Polymeroberfläche stattfindet. Des weiteren kann durch bestimmte Plasmagasarten eine Plasmapfropfung bzw. eine Plasmabeschichtung (Plasmapolymerisation) an bzw. auf der Oberfläche durchgeführt werden. Die äußerst reaktiven Spezies des Plasmagases können darüber hinaus reinigend und sogar entkeimend auf der Oberfläche wirken, so dass erfindungsgemäß unter Oberflächenbehandlung auch eine Oberflächenreinigung oder Oberflächenentkeimung verstanden wird.

Die Polarisation der polymeren Oberfläche führt zu einer Erhöhung der Oberflächenspannung. Dadurch wird eine vollständige Benetzung mit polaren Flüssigkeiten wie beispielsweise Alkoholen oder Wasser ermöglicht. Die Polarisation tritt auf, wenn Atome oder Molekülfragmente - angeregt durch das Plasma - mit Oberflächenmolekülen reagieren und infolgedessen in die Oberfläche eingebaut werden. Da dies meist sauerstoff- oder stickstoffhaltige Fragmente sind, spricht auch von einer Oberflächenoxidation.

Eine Oberflächenpfropfung tritt auf, wenn durch eine Reaktion ein gezielter Einbau von Molekülen, vorzugsweise an der Polymeroberfläche, stattfindet. So reagiert beispielsweise Kohlendioxid mit Kohlenwasserstoffverbindungen unter Bildung von Carboxylgruppen.

Eine Plasmabeschichtung ist dadurch gekennzeichnet, dass ein reaktives Plasmagas durch eine Art Polymerisation auf der Oberfläche mehr oder weniger geschlossen abgeschieden wird. Dadurch ist es unter anderem möglich Release-, Barriere-, Antifog- oder ganz allgemein Schutzschichten auf den Kunststoff- und Metallfolien herzustellen.

Eine Oberflächenreinigung ist dadurch gekennzeichnet, dass auf der Oberfläche abgelagerte Verunreinigungen, Additive oder niedermolekulare Bestandteile oxidiert und verdampft werden. Eine Entkeimung tritt auf, wenn die Zahl der Keime in der Art verringert wird, dass sie unterhalb der kritischen Keimkonzentration liegt.

Das Plasmagas das im erfindungsgemäßen Verfahren eingesetzt wird, ist dabei dadurch gekennzeichnet, dass dieses aus Mischungen aus reaktiven und inerten Gasen und/oder Aerosolen besteht. Durch die hohe Energie im Lichtbogen kommt es zur Anregung, Ionisation, Fragmentierung oder Radikalbildung des reaktiven Gases und/oder Aerosoles. Aufgrund der Strömungsrichtung des Plasmagases werden die aktiven Spezies aus dem Brennerraum herausgetragen und können gezielt zur Wechselwirkung mit der Oberfläche von Kunststoff- und Metallfolien gebracht werden.

Das oxidierend wirksame Prozessgas und/oder Aerosol kann in Konzentrationen von 0 bis 100 %, vorzugsweise zwischen 5 und 95 % zugegen sein.

Als oxidierende Plasmagase und/oder Aerosole werden vorzugsweise sauerstoffhaltige Gase und/oder Aerosole wie Sauerstoff (O₂), Kohlendioxid (CO₂), Kohlenmonoxid (CO), Ozon (O₃), Wasserstoffperoxid-Gas (H₂O₂), Wasserdampf (H₂O), verdampftes Methanol (CH₃OH), stickstoffhaltige Gase und/oder Aerosole wie nitrose Gase (NOₓ), Distickstoffoxid (N₂O), Stickstoff (N₂), Ammoniak (NH₃), Hydrazin (H₂N₄), schwefelhaltige Gase und/oder Aerosole wie Schwefeldioxid (SO₂), Schwefeltriöxid (SO₃), fluorhaltige Gase und/oder Aerosole wie Terafluorkohlenstoff (CF₄), Schwefelhexafluorid (SF₆), Xenondifluorid (XEF₂), Stickstofflrifluorid (NF₃), Bortrifluorid (BF₃), Siliciumtetrafluorid (SiF₄), Wasserstoff (H₂) oder Mischungen aus diesen eingesetzt. Inertgase sind vorzugsweise Edelgase, besonders bevorzugt ist Argon (Ar).

Als vernetzbare Plasmagase und/oder Aerosole werden vorzugsweise ungesättigte Kohlenwasserstoffe wie Ethylen, Propylen, Buten, Acetylen; gesättigte Kohlenwasserstoffe mit der allgemeinen Zusammensetzung CₙH₂ₙ₊₂, wie Methan, Ethan, Propan, Butan, Pentan, iso-Propan, iso-Butan; Vinylverbindungen wie Vinylacetat, Methylvinylether; Acrylate wie Acrylsäure, Methacrylsäure, Methacrylsäuremethylester; Silane mit der allgemeinen Zusammensetzung SiₙH₂ₙ₊₂, halogenierte Siliziumhydride wie SiCl₄, SiCl₃H, SiCl₂H₂, SiClH₃, Alkoxysilane wie Teraethoxysilan; Hexamethyldisilazan; Hexamethyldisiloxan eingesetzt.

Als pfropfbare Prozessgase und/oder Aerosole werden vorzugsweise Maleinsäureanhydrid, Acrylsäureverbindungen, Vinylverbindungen, Kohlendioxid (CO₂) eingesetzt.

Vorzugsweise wird in einer Vorstufe das aktive und das inerte Gas und/oder Aerosol gemischt und anschließend in die Zone der Bogenentladung eingebracht. Aus Sicherheitsgründen werden bestimmte Gas- und/oder Aerosolmischungen wie beispielsweise Sauerstoff und Silane unmittelbar vor dem Einbringen in die Zone der Bogenentladung gemischt.

Derartige im erfindungsgemäßen Verfahren verwendete Plasmen sind dadurch gekennzeichnet, dass ihre Temperaturen im Bereich des Bogens bei mehreren 10.000 Kelvin liegen. Da das austretende Plasmagas noch Temperaturen im Bereich von 1000 bis 2000 Kelvin aufweist, ist eine ausreichende Kühlung der temperaturempfindlichen polymeren Materialien notwendig. Dies kann im allgemeinen durch eine effektiv arbeitende Kühlwalze erfolgen.

Die Kontaktzeit von Plasmagas und Folienmaterial hat eine große Bedeutung. Vorzugsweise sollte diese auf ein Minimum reduziert werden, damit eine thermische Schädigung der Materialien ausbleibt. Eine minimale Kontaktzeit wird stets durch eine erhöhte Bahngeschwindigkeit erreicht. Die Bahngeschwindigkeiten der Folien ist üblicherweise höher als 1 m pro Minute, sie liegt vorzugsweise zwischen 20 und 600 m pro Minute.

Da die Lebenszeit der aktiven Spezies (Radikale und Ionen) unter Atmosphärendruck eingeschränkt ist, ist es vorteilhaft die Kunststoff- und Metallfolien in sehr geringem Abstand an der Brenneröffnung (Düse) vorbeizuführen. Vorzugsweise geschieht dies im Abstand von 0 bis 40 mm, besonders bevorzugt im Abstand von 1 bis 15 mm.

Die folgenden Beispiele sollen die Erfindung näher erläutern:

### Beispiele

Durch den Einsatz des im erfindungsgemäßen Verfahren beschriebenen Plasmabreitstrahlbrenners gelang es Oberflächen von Kunststoff- und Metallfolien im atmosphärischen Plasma zu modifizieren. Dies gelang mit einem - verglichen mit anderen Verfahren - nur geringem apparativem Aufwand, bei gleichzeitig niedrigen Prozesskosten. Da im Beispiel jede Neutrode des Plasmabrenners eine Austrittsöffnung für das Plasmagas vorsieht kann dieses dem Lichtbogen gezielt und homogen zugeführt werden. Der seitlich abströmende, bandförmige Plasmafreistrahl führt deshalb zu einer besonders homogenen Bearbeitung der Oberfläche.

Überraschenderweise konnten mittels des oben beschriebenen Brenners bei Atmosphärendruck auf verschiedenen Substraten Oberflächenspannungen erreicht werden, die sonst nur im Niederdruckplasma möglich sind.

Überraschenderweise zeigte sich auch, dass trotz der Anwendung eines durch eine Lichtbogenentladung erzeugten "heißen" Plasmas bei ausreichender Kühlung und angemessener Kontaktzeit keine thermische Schädigung der bearbeiteten Kunststoff-und Metallfolien auftrat.

Dazu wurden die relevanten Eigenschaften der nachfolgenden Folienmuster wie folgt gemessen. Die thermische Schädigung der Folienabschnitte wurde visuell bzw. durch mikroskopische Untersuchungen beurteilt. Die Bestimmung der Oberflächenspannung erfolgte mit handelsüblichen Testtinten der Fa. Arcotec Oberflächentechnik GmbH nach DIN 53364 bzw. ASTM D 2587. Die Angabe der Oberflächenspannung erfolgte in mN/m. Die Durchführung der Messungen erfolgte unmittelbar nach der Behandlung. Die Messfehler betragen ± 2 mN/m. Die Bestimmung der Elementverteilung auf der Folienoberfläche erfolgte mittels ESCA-Messungen (Photoelektronen-Spektroskopie). Die Angabe der Elementverteilung erfolgte dabei in Prozent.

Folgende Folienmaterialien wurden in unterschiedlichen Beispielen unter Anwendung des erfindungsgemäßen Verfahren vorbehandelt und auf ihre Oberflächeneigenschaften hin untersucht:

### Beispiel 1

PE 1: Einschichtige, 50 µ Dicke, einseitig corona-vorbehandelte, transparente Blasfolie aus einem Ethylen-Buten-Copolymeren (LLDPE, < 10 % Buten) mit einer Dichte von 0,935 g/cm³ und einem Melt-Flow-Index (MFI) von 0,5 g/10 min (DIN ISO 1133 Bed. D).

### Beispiel 2

PE 2: Einschichtige, 50 µ Dicke, einseitig corona-vorbehandelte, transparente Blasfolie aus einem Ethylen-Vinylacetat-Copolymeren (3,5 % Vinylacetat) mit ca. 600 ppm Gleitmittel (Erucasäureamid (ESA)) und ca. 1000 ppm Antiblockmittel (SiO₂), mit einer Dichte von 0,93 g/cm³ und einem Melt-Flow-Index (MFI) von 2 g/10 min (DIN ISO 1133 Bed. D).

### Beispiel 3

BOPP 1: Einschichtige, 20 µ Dicke, einseitig corona-vorbehandelte, transparente, biaxial orientierte Folie aus Polypropylen mit ca. 80 ppm Antiblockmittel (SiO₂), mit einer Dichte von 0,91 g/cm³ und einem Melt-Flow-Index (MFI) von 3 g/10 min bei 230°C.

### Beispiel 4

BOPP 2: Coextrudierte, dreischichtige, 20 µ Dicke, einseitig corona-vorbehandelte, transparente, biaxial orientierte Folie aus Polypropylen mit ca. 2500 ppm Antiblockmittel (SiO₂) in den Außenschichten), mit einer Dichte von 0,91 g/cm³ und einem Melt-Flow-Index (MFI) von 3 g/10 min bei 230°C.

### Beispiel 5

PET: Handelsübliche, einschichtige, 12 µ Dicke, einseitig corona-vorbehandelte, biaxial orientierte Folie aus Polyethylenterephthalat.

### Beispiel 6

PA: Handelsübliche, einschichtige, 15 µ Dicke, einseitig corona-vorbehandelte, biaxial orientierte Folie aus Nylon 6.

Der Plasmabehandlung wurden nur die unbehandelten Folienseiten unterzogen. Zum Einsatz kamen die Plasmagase Sauerstoff, Stickstoff und Kohlendioxid, jeweils in Verbindung mit Argon als inertem Trägergas. Innerhalb der Versuchsreihen wurde die Gaskonzentration und der Abstand zum Plasmabrenner variiert. Die Folien wurden visuell auf ihre thermische Schädigung hin untersucht. Die Oberflächenspannungen wurden mittels Testtinten, die Elementverteilung an der Oberfläche wurde mittels ESCA-Messung bestimmt. Eine zusammenfassende Übersicht über die Ergebnisse gibt Tabelle 1.

Am Beispiel des PE 1 (Nr. 4 bis 7, Tabelle 1) konnte gezeigt werden, dass bis zu einem Abstand (Folie - Brenneröffnung) von 10 mm vergleichbare Vorbehandlungseffekte erzielt werden. Erst oberhalb von 15 mm Abstand fällt das Vorbehandlungsniveau deutlich ab.

Die in Tabelle 1 aufgeführten Materialien wurden darüber hinaus zu Vergleichszwecken auch mittels Corona-Entladung vorbehandelt und unmittelbar nach der Behandlung auf ihre Oberflächenspannung hin mit Testtinten untersucht. Dabei wurden Energiedosen im Bereich von 0,1 bis 10 J/m² - wie sie in industriell eingesetzten Coronaanlagen üblich sind - verwendet.

Die Ergebnisse der Coronaentladung und der Plasmabehandlung (Vergleichsversuche) sind in Tabelle 2 gegenübergestellt.

Insbesondere beim Polypropylen wurde eine deutlich höhere Oberflächenspannung bei Anwendung des atmosphärischen Plasmas erzeugt. Aber auch beim PE wurden im Vergleich zur Coronavorbehandlung höhere Werte ermittelt.

**Tabelle 1: Oberflächenspannungswerte und Elementverteilungen nach der erfindungsgemäßen Plasmavorbehandlung diverser Folienmaterialien**

| Nr. | Material | Gas -art | Konz [%] | Ab stand [mm] | therm. Schädigung | Geschw. [m/min] | σ [mN /m] vorher nachher | | Atom % | | | O/C Verbältnis | C/O Verbältnis |
|---|---|---|---|---|---|---|---|---|---|---|---|---|---|
| | | | | | | | | | O | C | N | | |
| 1 | PE 1 | - | - | - | - | - | 32 | - | 0,8 | 99,2 | | 0,01 | 118,62 |
| 2 | PE1 | O₂ | 57 | 3 | nein | 265 | 32 | 60 | 13,7 | 86,3 | - | 0,16 | 6,28 |
| 3 | PE1 | O₂ | 89 | 3 | nein | 265 | 32 | 64 | 11,2 | 88,0 | 0,9 | 0,13 | 7,88 |
| 4 | PE1 | O₂ | 71 | 5 | nein | 265 | 32 | 62 - 64 | | | | | |
| 5 | PE 1 | O₂ | 71 | 10 | nein | 265 | 32 | 62 - 64 | | | | | |
| 6 | PE1 | O₂ | 71 | 15 | nein | 265 | 32 | 60 | | | | | |
| 7 | PE 1 | O₂ | 71 | 20 | nein | 265 | 32 | 50 - 52 | 10,5 | 88,8 | 0,8 | 0,12 | 8,48 |
| 8 | PE 1 | CO₂ | 50 | 3 | nein | 265 | 32 | 62 | 13,3 | 86,1 | 0,6 | 0,15 | 6,46 |
| 9 | PE 1 | N₂ | 50 | 3 | nein | 265 | 32 | 62-64 | 10,8 | 86,5 | 2,7 | 0,13 | 7,99 |
| 10 | PE 2 | O₂ | 57 | 3 | nein | 265 | 32 | 54 | | | | | |
| 11 | PE 2 | CO₂ | 50 | 3 | nein | 265 | 32 | 46 | | | | | |
| 12 | BOPP 1 | - | - | - | - | - | 32 | - | 0,9 | 98,9 | 0,2 | 0,01 | 113,33 |
| 13 | BOPP 1 | O₂ | 84 | 3 | nein | 265 | 32 | 50 | | | | | |
| 14 | BOPP 1 | O₂ | 89 | 3 | nein | 265 | 32 | - | 13,2 | 86,4 | 0,4 | 0,15 | 6,56 |
| 15 | BOPP 1 | CO₂ | 73 | 3 | nein | 265 | 32 | 58 | 16,0 | 83,4 | 0,6 | 0,19 | 5,21 |
| 16 | BOPP 1 | N₂ | 50 | 3 | nein | 265 | - | | 2,2 | 95,6 | 2,2 | 0,02 | 42,76 |
| 17 | BOPP 2 | O₂ | 57 | 3 | nein | 265 | 28 | 48-50 | | | | | |
| 18 | BOPP 2 | CO₂ | 50 | 3 | nein | 265 | 28 | 52 | | | | | |
| 19 | PET | O₂ | 84 | 3 | nein | 265 | 32 | 64 | | | | | |
| 20 | PET | CO₂ | 73 | 3 | nein | 265 | 32 | 62 - 64 | | | | | |
| 21 | PAB | O₂ | 57 | 3 | nein | 265 | 41 | 60 | | | | | |
| 22 | PAB | CO₂ | 50 | 3 | nein | 265 | 41 | 60 - 62 | | | | | |

| | | | | | | | | | | | | | |
|---|---|---|---|---|---|---|---|---|---|---|---|---|---|
| σ = Oberflächenspannung | | | | | | | | | | | | | |

**Tab. 2: Oberflächenspannung nach Coronaentladung und erfindungsgemäße Plasmabehandlung**

| Nr. | Material | σ[N/m] nach Corona | σ [mN/m] nach Plasma |
|---|---|---|---|
| 1 | PE1 | 54 | 62 - 64 |
| 2 | PE 2 | 42 | 54 |
| 3 | BOPP 1 | 38 | 56 - 58 |
| 4 | BOPP 2 | 38 - 42 | 52 |
| 5 | PET | 48 - 50 | 62 - 64 |
| 6 | PA | 56 | 60 - 62 |

## Patentansprüche

1. Verwendung eines indirekten atmosphärischen Plasmatrons mit einer länglichen Plasmakammer, die in kaskadiertem Aufbau eine Mehrzahl von elektrisch gegeneinander isolierten Neutroden umfasst, wobei die zur Erzeugung des Plasma-Lichtgas erforderlichen Elektroden koaxial zur Längsachse der Plasmakammer angeordnet sind und die Plasmastrahl-Austrittsöffnung parallel zur Längsachse der Plasmakammer verläuft,
zur homogenen voll- oder teilflächigen Oberflächenbehandlung oder Beschichtung
- bahnförmiger metallischer Werkstoffe mit einer Dicke kleiner als 100 µm oder
- bahnförmiger polymerer Kunststofffolien umfassend wenigstens ein thermoplastisches Material ausgewählt aus der Gruppe bestehend aus Polyolefinen, Polyestern, Polyamiden, Polyvinylchloriden, Polyvinyldichloriden, Polycarbonaten, Polyvinylalkoholen, Polyethylvinylalkoholen, Polyacrylnitrilen, Polyacryl-Butadien-Styrolen, Polystyrol-Acrylnitrilen, Polyacrylester-Styrol-Acrylnitrilen, Polystyrolen, Polyacrylaten, Zellgläsern, Polysulfonen, Polyethersulfonen, Polyphenylsulfiden, Polyimiden und Polyaryletherketonen, deren Mischungen, Co- oder Terpolymeren.

2. Verwendung nach Anspruch 1, **dadurch gekennzeichnet, dass** ein indirektes Plasmatron, bei dem zumindest eine Neutrode mit einem Permanentmagneten-Paar zur Beeinflussung der Form und der Position des Plasma-Lichtbogens versehen ist, verwendet wird.

3. Verwendung nach einem der vorherigen Ansprüche, **dadurch gekennzeichnet, dass** ein indirektes Plasmatron, das mit einer Möglichkeit zur Zuführung eines Gases und/oder Aerosols in die Plasmakammer versehen ist, verwendet wird.

4. Verfahren zur homogenen voll- oder teilflächigen Oberflächenbehandlung oder Beschichtung eines über Walzenpaare bewegten bahnförmigen metallischen Werkstoffes mit einer Dicke kleiner als 100 µm oder einer bahnförmigen polymeren Kunststofffolie umfassend wenigstens ein thermoplastisches Material ausgewählt aus der Gruppe bestehend aus Polyolefinen, Polyestern, Polyamiden, Polyvinylchloriden, Polyvinyldichloriden, Polycarbonaten, Polyvinylalkoholen, Polyethylvinylalkoholen, Polyacrylnitrilen, Polyacryl-Butadien-Styrolen, Polystyrol-Acrylnitrilen, Polyacrylester-Styrol-Acrylnitrilen, Polystyrolen, Polyacrylaten, Zellgläsern, Polysulfonen, Polyethersulfonen, Polyphenylsulfiden, Polyimiden und Polyaryletherketonen, deren Mischungen, Co- oder Terpolymeren,
wobei man ein durch ein indirektes Plasmatron, welches eine längliche Plasmakammer aufweist, die in kaskadiertem Aufbau eine Mehrzahl von elektrisch isolierten Neutroden umfasst, wobei die zur Erzeugung des Plasma-Lichtbogens erforderlichen Elektroden koaxial zur Längsachse der Plasmakammer angeordnet sind und die Plasmastrahlaustrittsöffnung parallel zur Längsachse der Plasmakammer verläuft, erzeugtes atmosphärisches Plasma unter Zuführung wenigstens
- eines oxidierenden Plasmagases und/oderAerosols ausgewählt aus der Gruppe bestehend aus sauerstoffhaltigen, stickstoffhaltigen, schwefelhaltigen und fluorhaltigen Gasen und/oder Aerosolen oder deren Mischungen,
- eines vernetzbaren Plasmagases und/oder Aerosols, oder
- eines pfropfbaren Prozessgases und/oder Aerosols
auf die Oberfläche der polymeren Kunststofffolie oder des metallischen Werkstoffes einwirken lässt.

5. Verfahren nach Anspruch 4, **dadurch gekennzeichnet, dass** die polymeren bahnförmigen Kunststofffolien gegebenenfalls mit Metall, Metalloxid oder SiOₓ bedampft sind.

6. Verfahren nach Anspruch 4 und 5, **dadurch gekennzeichnet, dass** die Oberflächenbehandlung eine Erhöhung der Oberflächenspannung, eine Oberflächenpfropfung, eine Oberflächenreinigung oder eine Oberflächenentkeimung ist.

7. Verfahren nach einem der Ansprüche 4 bis 6, **dadurch gekennzeichnet, dass** man das oxidierend wirkende Gas und/oder Aerosol, das vernetzbare Gas und/oder Aerosol oder das pfropfbare Gas und/oder Aerosol im Gemisch mit einem Inertgas zuführt.

8. Verfahren nach einem der Ansprüche 4 bis 7, **dadurch gekennzeichnet, dass** die bahnförmigen polymerenKunststofffolien oder metallischen Werkstoffe mit einer Geschwindigkeit im Bereich von 1 und 600 m pro Minute bewegt werden.

9. Verfahren nach einem der Ansprüche 4 bis 8, **dadurch gekennzeichnet, dass** man das atmosphärische Plasma in einem Abstand von 0 bis 40 mm auf die polymere Kunststofffolie oder den metallischen Werkstoff einwirken lässt.

## Claims

1. Use of an indirect atmospheric plasmatron with an elongate plasma chamber which encompasses, in a cascaded structure, a plurality of neutrodes electrically insulated with respect to one another, where the electrodes required for generation of the plasma arc gas have been arranged coaxially with respect to the longitudinal axis of the plasma chamber and the plasma-jet outlet aperture runs parallel to the longitudinal axis of the plasma chamber,
for homogeneous full- or part-surface treatment or coating
- of metallic webs whose thickness is smaller than 100 µm or
- of polymeric plastics foil-webs encompassing at least one thermoplastic material selected from the group consisting of polyolefins, polyesters, polyamides, polyvinyl chlorides, polyvinyl dichlorides, polycarbonates, polyvinyl alcohols, polyethylvinyl alcohols, polyacrylonitriles, polyacrylic-butadiene-styrenes, polystyrene-acrylonitriles, polyacrylate-styrene-acrylonitriles, polystyrenes, polyacrylates, celluloses, polysulphones, polyether sulphones, polyphenyl sulphides, polyimides and polyaryl ether ketones, and their mixtures, or co- or terpolymers.

2. Use according to Claim 1, **characterized in that** an indirect plasmatron is used in which at least one neutrode has a permanent-magnet pair for influencing the shape and the position of the plasma arc.

3. Use according to any of the preceding claims, **characterized in that** an indirect plasmatron is used which has capability for introduction of a gas and/or aerosol into the plasma chamber.

4. Process for homogeneous full- or part-surface treatment or coating of a metallic web whose thickness is smaller than 100 µm, moved over pairs of rolls, or of a polymeric plastics-foil web encompassing at least one thermoplastic material selected from the group consisting of polyolefins, polyesters, polyamides, polyvinyl chlorides, polyvinyl dichlorides, polycarbonates, polyvinyl alcohols, polyethylvinyl alcohols, polyacrylonitriles, polyacrylic-butadiene-styrenes, polystyrene-acrylonitriles, polyacrylate-styrene-acrylonitriles, polystyrenes, polyacrylates, celluloses, polysulphones, polyether sulphones, polyphenyl sulphides, polyimides and polyaryl ether ketones, and their mixtures, or co- or terpolymers,
where an atmospheric plasma generated via an indirect plasmatron which has an elongate plasma chamber which encompasses, in a cascaded structure, a plurality of electrically insulated neutrodes, where the electrodes required for generation of the plasma arc gas have been arranged coaxially with respect to the longitudinal axis of the plasma chamber and the plasma-jet outlet aperture runs parallel to the longitudinal axis of the plasma chamber, is allowed to act on the surface of the polymeric plastics foil or of the metallic material, with introduction of at least
- one oxidizing plasma gas and/or aerosol selected from the group consisting of oxygen-containing, nitrogen-containing, sulphur-containing and fluorine-containing gases and/or aerosols and their mixtures,
- a crosslinkable plasma gas and/or aerosol, or
- a graftable process gas and/or aerosol.

5. Process according to Claim 4, **characterized in that** metal, metal oxide or SiOₓ has, if appropriate, been vapour-deposited onto the polymeric plastics-foil webs.

6. Process according to Claim 4 and 5, **characterized in that** the surface treatment is an increase in surface tension, a surface-grafting process, a surface-cleaning process, or a surface-sterilization process.

7. Process according to any of Claims 4 to 6, **characterized in that** the oxidizing gas and/or aerosol, the crosslinkable gas and/or aerosol or the graftable gas and/or aerosol is introduced in a mixture with an inert gas.

8. Process according to any of Claims 4 to 7, **characterized in that** the polymeric plastics-foil webs or metallic materials are moved at a velocity in the range from 1 to 600 m per minute.

9. Process according to any of Claims 4 to 8, **characterized in that** the atmospheric plasma is allowed to act on the polymeric plastics foil or on the metallic material at a distance of from 0 to 40 mm.

## Revendications

1. Utilisation d'un plasmatron atmosphérique indirect doté d'une chambre à plasma allongée qui comprend dans une structure en cascade plusieurs neutrodes électriquement isolées les unes des autres, les électrodes nécessaires pour créer le plasma lumineux dans le gaz étant disposées coaxialement par rapport à l'axe longitudinal de la chambre à plasma et l'ouverture de sortie du faisceau de plasma s'étendant parallèlement à l'axe longitudinal de la chambre à plasma,
pour le traitement ou le revêtement homogène de la totalité ou de parties de la surface de
- matériaux métalliques en forme de bande d'une épaisseur inférieure à 100 µm ou
- de films en matière synthétique polymère en forme de bande, qui comprennent au moins un matériau thermosplastique sélectionné dans l'ensemble constitué des polyoléfines, des polyesters, des polyamides, des poly(chlorure de vinyle), des poly(dichlorure de vinyle), des polycarbonates, des poly(alcool vinylique), des poly(alcool éthylvinylique), des polyacrylonitriles, des copolymères d'acrylate, de butadiène et de styrène, des copolymères de styrène et d'acrylonitrile, des copolymères d'acrylester, de styrène et d'acrylonitrile, des polystyrènes, des polyacrylates, des verres cellulaires, des polysulfones, des polyéthersulfones, des poly(sulfure de phényle), des polyimides et des polyaryléthercétones ainsi que de leurs mélanges, copolymères ou terpolymères.

2. Utilisation selon la revendication 1, **caractérisée en ce que** l'on utilise un plasmatron indirect dans lequel au moins une neutrode est dotée d'une paire d'aimants permanents qui agissent sur la forme et sur la position de l'arc lumineux du plasma.

3. Utilisation selon l'une des revendications précédentes, **caractérisée en ce que** l'on utilise un plasmatron indirect doté de la possibilité d'apporter un gaz et/ou un aérosol dans la chambre à plasma.

4. Procédé pour le traitement ou le revêtement homogène de la totalité ou de parties de la surface d'un matériau métallique en forme de bande déplacé par une paire de cylindres et dont l'épaisseur est inférieure à 100 µm ou d'une feuille en matière synthétique polymère en forme de bande qui comprend au moins un matériau thermoplastique sélectionné dans l'ensemble constitué des polyoléfines, des polyesters, des polyamides, des poly(chlorure de vinyle), des poly(dichlorure de vinyle), des polycarbonates, des poly(alcool vinylique), des poly(alcool éthylvinylique), des polyacrylonitriles, des copolymères d'acrylate, de butadiène et de styrène, des copolymères de styrène et d'acrylonitrile, des copolymères d'acrylester, de styrène et d'acrylonitrile, des polystyrènes, des polyacrylates, des verres cellulaires, des polysulfones, des polyéthersulfones, des poly(sulfure de phényle), des polyimides et des polyaryléthercétones ainsi que de leurs mélanges, copolymères ou terpolymères,
dans lequel on fait agir sur la surface du film en matière synthétique polymère ou du matériau métallique un plasma créé en conditions atmosphériques par un plasmatron indirect qui présente une chambre à plasma allongée qui comprend dans une structure en cascade plusieurs neutrodes isolées électriquement les unes des autres, les électrodes nécessaires pour la création de l'arc lumineux de plasma étant disposées coaxialement par rapport à l'axe longitudinal de la chambre à plasma et l'ouverture de sortie du faisceau de plasma s'étendant parallèlement à l'axe longitudinal de la chambre à plasma,
en apportant au moins
- un gaz de plasma et/ou un aérosol oxydants sélectionnés dans l'ensemble constitué des gaz et/ou aérosols qui contiennent de l'oxygène, de l'azote, du soufre, du fluor ou de leurs mélanges,
- un gaz de plasma et/ou aérosol réticulables ou
- un gaz de traitement et/ou aérosol greffables.

5. Procédé selon la revendication 4, **caractérisé en ce que** les feuilles en matière synthétique polymère en forme de bande sont éventuellement recouvertes d'un métal, d'un oxyde métallique ou de SiOₓ par vaporisation.

6. Procédé selon les revendications 4 et 5, **caractérisé en ce que** le traitement de surface consiste en une augmentation de la tension superficielle, en un greffage de surface, un nettoyage de la surface ou une stérilisation de la surface.

7. Procédé selon l'une des revendications 4 à 6, **caractérisé en ce que** l'on apporte le gaz et/ou aérosol à action oxydante, le gaz et/ou aérosol réticulables ou le gaz et/ou aérosol greffables en mélange avec un gaz inerte.

8. Procédé selon l'une des revendications 4 à 7, **caractérisé en ce que** les feuilles en matière synthétique polymère en forme de bande ou le matériau métallique sont déplacés à une vitesse comprise dans la plage de 1 à 600 m par minute.

9. Procédé selon l'une des revendications 4 à 8, **caractérisé en ce que** l'on fait agir le plasma atmosphérique sur la feuille de matière synthétique ou le matériau métallique depuis une distance de 0 à 40 mm.
